# FASCICULE DE BREVET EUROPEEN

(11) **EP 1 726 219 B1**
(45) Date de publication et mention de la délivrance du brevet: **08.10.2008**
(21) Numéro de dépôt: 06290830.6
(22) Date de dépôt: 23.05.2006
(51) Int. Cl.: A23L 1/315

(54) **Procede de preparation de rillettes de poulet roti**
Verfahren zur Herstellung von Rilletes aus gebratenem Huhn
Process for preparing rillettes from roasted chicken

(30) Priorité: 27.05.2005 FR 0505368
(43) Date de publication de la demande: 29.11.2006
(73) Titulaire: LUISSIER, 78220 Viroflay (FR)
(72) Inventeur: Cormier, André, 72190 Coulaines (FR)
(74) Mandataire: Corizzi, Valérie

(56) Documents cités:
- FR-A- 2 208 616
- FR-A- 2 570 932
- FR-A- 2 596 957
- GB-A- 1 189 670
- GB-A- 1 293 449
- GB-A- 2 087 210
- US-A- 3 285 753
- US-A- 3 709 699
- US-A- 5 431 937
- PATENT ABSTRACTS OF JAPAN vol. 013, no. 447 (C-642), 6 octobre 1989 (1989-10-06) & JP 01 171461 A (MUNEHARU NAKANISHI), 6 juillet 1989 (1989-07-06)

## Description

L'invention a pour objet un nouveau procédé de préparation d'un produit alimentaire à tartiner du type rillettes, ce produit se caractérisant par une saveur et un goût nouveaux.

De façon ancestrale, les rillettes se fabriquent à partir de viande de porc ou de coche auxquels sont ajoutés le sel et le poivre. Les viandes sont rissolées et cuites lentement dans leur graisse pour obtenir des fibres et la saveur des rillettes.

D'autres types de rillettes sont connues telles que des rillettes de volailles (poulet, dinde, oie, canard), de lapin, de gibier.

D'un point de vue diététique, les rillettes ont la réputation d'être un produit gras. C'est pourquoi des rillettes moins riches en graisses, notamment des rillettes obtenues à partir de viandes de volaille, sont appréciées des consommateurs soucieux de disposer d'une alimentation moins chargée en graisses.

On a donc cherché à mettre au point un procédé de fabrication de rillettes à base de viande de volaille, et notamment de viande de poulet, qui conduise à un produit parfumé, dont la saveur rappelle celle du poulet rôti, ou d'une autre volaille rôtie.

Ce procédé se caractérise notamment en ce que l'on utilise, en plus de la viande, une peau de poulet ou une peau d'une autre volaille ayant subi un procédé de préparation particulier.

L'utilisation de peau de volaille dans la préparation de rillettes est connue notamment par le « code des usages de la charcuterie ».

Toutefois, l'incorporation de peau de poulet crue conduit à des rillettes dont le goût est trop fade pour satisfaire le consommateur.

Différents documents décrivent des produits alimentaires obtenus à partir de peaux de poulet :
Plusieurs documents concernent des viandes de poulet ou de volaille reconstituées. Les viandes sont précuites, amalgamées à l'aide d'un liant qui peut être fait à base de peau de poulet (GB-1293449 ; GB-1257696 ; GB-1,189,670 ; GB-1,127,718 ; GB-1118694 ; GB-1041497).

Selon les documents EP-0951843 et GB-2269083, des viandes de poulet gelées sont réduites en copeaux et mélangées avec des peaux de poulet également en copeaux. L'ensemble est mélangé, mis en forme et cuit.

Le document Uns-5,786,015 décrit un procédé pour produire un aliment à base de poulet à taux de protéines élevé. Des morceaux de poulet (chair et peau) sont cuits dans de l'huile et pressés pour en extraire l'huile.

Le document GB-2087210 décrit un produit obtenu à partir de peaux de volaille. Les peaux découpées en morceaux sont bouillies, refroidies à basse température et broyées. De telles particules sont utilisées pour la production d'agents aromatisants destinés à conférer un goût de viande à des aliments.

Le document US-3,704,135 décrit un procédé de reconstitution d'une peau de poulet ou de volaille à partir d'une peau de poulet ou de volaille broyée.

Une émulsion de peau est préparée et mise en forme puis cuite. Des peaux artificielles de grand format peuvent ainsi être obtenues, elles sont destinées à l'enrobage de viandes de volaille.

Le document US-2004/0067291 décrit un produit croustillant à manger en snack obtenu par friture de morceaux de peaux de poulet. Ces peaux de poulet peuvent avoir été préalablement macérées dans une sauce telle qu'une sauce aigre-douce.

Toutefois aucun de ces documents ne concerne la préparation de rillettes et aucun de ces documents ne divulgue le procédé particulier qui fait l'objet de la présente invention.

L'invention a pour objet un procédé de préparation d'un produit alimentaire à tartiner, tel que des rillettes, ce procédé étant caractérisé en ce que :
(i) une viande d'une première volaille est rissolée en marmite dans de la graisse animale ;
(ii) une peau d'une seconde volaille crue est rôtie et découpée ;
(iii) la peau issue de l'étape (ii) est additionnée dans la marmite dans laquelle cuit la viande de la première volaille ;
(iv) l'ensemble est mélangé et rissolé ;
(v) l'ensemble est cuit ;
(vi) après un mélange final le produit est conditionné.

De façon facultative, l'étape (ii) peut être précédée d'une étape (ibis) dans laquelle la peau de la seconde volaille est macérée dans un mélange comprenant du miel ou du sucre, et du vinaigre.

A la différence des procédés de l'art antérieur, le procédé de l'invention conduit à un produit au goût relevé de volaille rôtie apte à satisfaire le consommateur.

Les premières volailles dont la viande est extraite pour produire les rillettes selon le procédé exposé ci-dessus sont choisies notamment parmi : le poulet, la dinde, l'oie, le canard. De préférence on choisit du poulet.

La viande peut être issue de toutes les parties de la volaille choisie pour la préparation.

Selon une variante, la viande de la première volaille peut être remplacée par du lapin ou du gibier.

Cette viande est rissolée en marmite dans une graisse animale, de préférence on choisit de la graisse d'oie ou de la graisse de canard. On peut aussi utiliser un mélange de graisse d'oie ou de canard avec de la graisse de porc. Pour cette étape, la viande peut être incorporée de façon progressive.

Le rissolage est un traitement par la chaleur avec coloration jusqu'à la caramélisation en surface d'une viande obtenue en utilisant un corps gras chauffé pour la saisir. Le rissolage se fait dans une quantité significative de matière grasse, la viande est mélangée constamment de façon à obtenir une coloration bien répartie sur l'ensemble de la viande.

La marmite est de la taille appropriée au volume de produit à préparer.

La viande de la première volaille est incorporée dans la graisse animale et rissolée.

Dans l'étape (ii), la peau d'une seconde volaille est préparée de façon parallèle ou préalable à l'étape (i).

La seconde volaille peut être du poulet, de la dinde, de l'oie, du canard ou du gibier. Selon le procédé de l'invention, la peau de poulet est utilisée préférentiellement.

Selon une variante préférée de l'invention, la première et la seconde volaille sont identiques.

Selon une variante préférée de l'invention, la peau de volaille crue, obtenue de façon connue de l'homme du métier est laissée à macérer dans un mélange comprenant du sucre ou du miel, et du vinaigre.

De préférence le mélange de peau et de marinade comprend en poids :
- 1 à 20% de vinaigre
- 2 à 30 % de miel ou de sucre
- 50 à 97% de peau de volaille.

De préférence on emploie du miel et du vinaigre qui peuvent être de toute provenance et de toute nature. D'autres constituants peuvent être utilisés dans la marinade et notamment des épices, des plantes aromatiques, des aromates, des vins, des alcools, des préparations aromatiques.

La marinade est préparée par simple mélange à froid ou à chaud de ses constituants. Le temps de macération est de 30 minutes à 24 heures. La macération se fait à une température allant de 0 à 4° C.

La peau macérée est éventuellement égouttée, puis rôtie par exposition à une source de chaleur à une température allant de 180°C à 500°C. Toutefois, on peut utiliser directement une peau crue et la rôtir sans étape de macération.

L'équipement utilisé pour le rôtissage est constitué de rampes : gaz, électrique, infra-rouge.

La peau rôtie peut être refroidie puis découpée en morceaux. Selon une variante de l'invention, le découpage de la peau peut avoir lieu avant la macération ou avant le rôtissage.

Elle peut être utilisée directement dans le procédé en l'incorporant au mélange de l'étape (i). Selon une variante de l'invention, elle peut être conditionnée pour être conservée en vue d'une utilisation différée, éventuellement pasteurisée, congelée.

La peau rôtie de la seconde volaille est incorporée dans la marmite en complément de la viande de la première volaille.

La proportion de viande de la première volaille et de peau de la seconde volaille rôtie, éventuellement macérée, dans la marmite à l'étape (iii) est de 3 à 20% de peau, en poids par rapport au poids de la viande.

L'ensemble constitué de la première volaille et de la seconde volaille est rissolé.

Le temps total du rissolage (étapes (i) et (iv)) varie de 1 heure à 2 heures à une température de 80° C à 120° C, de préférence de 100 à 110°C. Pour l'étape de rissolage, la température indiquée est celle des parois de la marmite dans laquelle s'effectue cette étape. Tout le mélange n'atteint pas simultanément cette température.

A l'étape (v), la cuisson dans la marmite est d'une durée de 2 heures à 5 heures, à une température de 85° C à 110°C, de préférence de 90 à 95°C. Dans cette étape, la cuisson se fait sans agitation, de façon lente, la viande étant recouverte de matière grasse (la graisse incorporée dans l'étape (i) et la graisse relarguée par la viande dans les étapes précédentes). L'ensemble du mélange est sensiblement à la même température. Selon une variante de l'invention, la cuisson à l'étape (v) peut être faite sous pression.

A l'issue, le mélange est homogénéisé, dosé et conditionné. Le conditionnement est adapté au mode de commercialisation : à la découpe ou en pots individuels.

D'autres constituants, additifs et aromates connus de l'homme du métier, peuvent être introduits à l'une quelconque des étapes ci-dessus. On peut citer notamment le sel, les herbes aromatiques, les épices, le caramel, les vins, les alcools...

### Exemple :

Dans un cuiseur de 360 L on introduit, à froid, 50 kg de graisse de canard. La marmite est portée à 80°C.

200 kg de viande de poulet issue de la cuisse sont introduits dans la graisse fondue.

L'ensemble est mélangé à l'aide d'un agitateur mécanique et rissolé entre 100 et 120°C pendant 35 minutes.

De façon parallèle, on prépare la peau de poulet rôtie à partir de 60 kg de peau de poulet crue, qui sont introduits dans un mélange de 3 1 de vinaigre de vin et 6 kg de miel. L'ensemble de la peau et de la marinade est malaxé et les peaux sont placées sur la grille d'une rôtissoire et cuites pendant 15 minutes à 270°C. Les peaux rôties sont refroidies et découpées en morceaux à l'aide d'une lame.

Les morceaux de peau sont introduits dans le cuiseur ainsi que des aromates, des carottes, du sel, du poivre. L'ensemble est mélangé pendant 15 minutes puis rissolé pendant 2 heures à découvert.

La cuisson se poursuit pendant 2 heure(s) à 100°C.

Le cuiseur est ensuite ouvert, le mélange homogénéisé à l'aide d'un agitateur mécanique et transféré dans des récipients de 220g qui sont operculés et stockés à froid (0 à 4°C).

## Revendications

1. Procédé de préparation d'un produit alimentaire à tartiner, tel que des rillettes, ce procédé étant **caractérisé en ce que** :
(i) une viande d'une première volaille est rissolée en marmite dans de la graisse animale ;
(ii) une peau d'une seconde volaille crue est rôtie et découpée ;
(iii) la peau issue de l'étape (ii) est additionnée dans la marmite dans laquelle cuit la viande de la première volaille ;
(iv) l'ensemble est mélangé et rissolé ;
(v) l'ensemble est cuit ;
(vi) après un mélange final le produit est conditionné, étant entendu que la viande de la première volaille peut être remplacée par du lapin ou du gibier et la viande de la seconde volaille peut être remplacée par du gibier.

2. Procédé selon la revendication 1, **caractérisé en ce que** l'étape (ii) est précédée d'une étape (ibis) dans laquelle la peau de la seconde volaille est macérée dans un mélange comprenant du miel ou du sucre, et du vinaigre.

3. Procédé selon la revendication 1 ou la revendication 2, **caractérisé en ce que** la première volaille est choisie parmi : le poulet, la dinde, l'oie, le canard, de préférence le poulet.

4. Procédé selon l'une quelconque des revendications 1 à 3, **caractérisé en ce que** la graisse animale est choisie parmi la graisse d'oie et la graisse de canard.

5. Procédé selon l'une quelconque des revendications 1 à 4, **caractérisé en ce que** la seconde volaille est choisie parmi du poulet, de la dinde, de l'oie, du canard, de préférence du poulet.

6. Procédé selon l'une quelconque des revendications 2 à 5, **caractérisé en ce que** l'ensemble constitué de la peau et de la marinade à l'étape (ibis) comprend en poids 1 à 20% de vinaigre, 2 à 30% de miel ou de sucre, et 50 à 97 % de peau de volaille.

7. Procédé selon l'une quelconque des revendications 2 à 5, **caractérisé en ce que** la macération se fait entre 0 et 4 °C pendant une durée de 30 minutes à 24 heures.

8. Procédé selon l'une quelconque des revendications 1 à 7, **caractérisé en ce que** le rôtissage de l'étape (ii) se fait à une température allant de 180 à 500°C.

9. Procédé selon l'une quelconque des revendications 1 à 8, **caractérisé en ce que** la proportion de viande de la première volaille et de peau de la seconde volaille rôtie et macérée à l'étape (iii) est de 3 à 20% en poids de peau par rapport au poids de la viande.

10. Procédé selon l'une quelconque des revendications 1 à 9, **caractérisé en ce que** le temps total du rissolage est de 1 à 2 heures à une température de 80 à 120°C, de préférence de 100 à 110°C.

11. Procédé selon l'une quelconque des revendications 1 à 10, **caractérisé en ce que** dans l'étape (v), l'ensemble constitué de la chair de volaille et de la peau macérée rôtie est cuit en marmite pendant une durée de 2 à 5 heures, à une température de 85 à 110°C, de préférence de 100 à 110°C.

## Claims

1. Method for preparing a food product for spreading, such as rillettes, wherein this method is **characterised in that**:
(i) the meat of a first fowl is browned in animal fat in a cooking pot,
(ii) the skin of a second, uncooked fowl is roasted and cut up,
(iii) the skin from step (ii) is added to the cooking pot in which the meat of the first fowl is cooked,
(iv) everything is mixed together and browned,
(v) the mixture is cooked,
(vi) after final mixing the product is packaged, whereby it is understood that the meat of the first fowl can be replaced by rabbit or game and the meat of the second fowl can be replaced by game.

2. Method according to claim 1, **characterised in that** the step (ii) is preceded by a step (ibid.) in which the skin of the second fowl is soaked in a mixture containing honey or sugar, and vinegar.

3. Method according to claim 1 or 2, **characterised in that** the first fowl is selected from: chicken, turkey, goose, duck, preferably chicken.

4. Method according to any one of the claims 1 to 3, **characterised in that** the animal fat is selected from goose fat and duck fat.

5. Method according to any one of the claims 1 to 4, **characterised in that** the second fowl is selected from chicken, turkey, goose, duck, preferably chicken.

6. Method according to any one of the claims 2 to 5, **characterised in that** the whole mixture constituted by the skin and the marinade in the step (ibid.) comprises by weight 1 to 20% vinegar, 2 to 30% honey or sugar and 50 to 97% poultry skin.

7. Method according to any one of the claims 2 to 5, **characterised in that** the soaking is carried out between 0 and 4°C for a duration of 30 minutes to 24 hours.

8. Method according to any one of the claims 1 to 7, **characterised in that** the roasting of step (ii) is carried out a temperature of 180 to 500°C.

9. Method according to any one of the claims 1 to 8, **characterised in that** the proportion of meat of the first fowl and of skin of the second fowl, roasted and soaked in step (iii), is 3 to 20% by weight of skin in relation to the weight of the meat.

10. Method according to any one of the claims 1 to 9, **characterised in that** the total browning time is from 1 to 2 hours at a temperature of 80 to 120°C, preferably 100 to 110°C.

11. Method according to any one of the claims 1 to 10, **characterised in that** in step (v) the whole mixture constituted by the poultry flesh and the roasted, soaked skin is cooked in a cooking pot for a duration of 2 to 5 hours at a temperature of 85 to 110°C, preferably 100 to 110°C.

## Patentansprüche

1. Verfahren zur Herstellung eines alimentären Aufstricherzeugnisses, wie zum Beispiel Rillettes, wobei das Verfahren **dadurch gekennzeichnet ist, dass**
(i) ein Fleisch eines ersten Geflügels in einem Kessel in tierischem Fett angebraten wird;
(ii) eine rohe Haut eines zweiten Geflügels gegrillt und geschnitten wird;
(iii) die Haut, die aus dem Schritt (ii) hervorgegangen ist, in den Kessel gegeben wird, in dem das Fleisch des ersten Geflügels kocht bzw. brät;
(iv) die Gesamtheit gemischt und angebraten wird;
(v) die Gesamtheit gekocht bzw. gebraten wird;
(vi) nach einem abschließenden Mischen das Produkt konditioniert wird, wobei es sich versteht, dass das Fleisch des ersten Geflügels durch Kaninchen oder Wild ersetzt werden kann und das Fleisch des zweiten Geflügels durch Wild ersetzt werden kann.

2. Verfahren nach Anspruch 1, **dadurch gekennzeichnet , dass** dem Schritt (ii) ein Schritt (ibis) vorausgeht, in dem die Haut des zweiten Geflügels in einem Gemisch, umfassend Honig oder Zucker und Essig, mazeriert wird.

3. Verfahren nach Anspruch 1 oder Anspruch 2, **dadurch gekennzeichnet , dass** das erste Geflügel ausgewählt ist aus: dem Hühnchen, der Pute, der Gans, der Ente, vorzugsweise dem Hühnchen.

4. Verfahren nach einem der Ansprüche 1 bis 3, **dadurch gekennzeichnet , dass** das tierische Fett ausgewählt ist aus dem Gänsefett und dem Entenfett.

5. Verfahren nach einem der Ansprüche 1 bis 4, **dadurch gekennzeichnet , dass** das zweite Geflügel ausgewählt ist aus dem Hühnchen, der Pute, der Gans, der Ente, vorzugsweise dem Hähnchen.

6. Verfahren nach einem der Ansprüche 2 bis 5, **dadurch gekennzeichnet , dass** die Gesamtheit, die von der Haut und der Marinade im Schritt (ibis) gebildet wird, 1 bis 20 Gew.-% Essig, 2 bis 30 Gew.-% Honig oder Zucker und 50 bis 97 Gew.-% Geflügelhaut umfasst.

7. Verfahren nach einem der Ansprüche 2 bis 5, **dadurch gekennzeichnet , dass** die Mazeration zwischen 0 und 4°C während einer Dauer von 30 Minuten bis 24 Stunden erfolgt.

8. Verfahren nach einem der Ansprüche 1 bis 7, **dadurch gekennzeichnet , dass** das Grillen des Schrittes (ii) bei einer Temperatur, die von 180 bis 500°C reicht, erfolgt.

9. Verfahren nach einem der Ansprüche 1 bis 8, **dadurch gekennzeichnet, dass** das Verhältnis von Fleisch des ersten Geflügels und von gegrillter und mazerierter Haut des zweiten Geflügels im Schritt (iii) von 3 bis 20 Gew.-% an Haut, bezogen auf das Gewicht des Fleisches, beträgt.

10. Verfahren nach einem der Ansprüche 1 bis 9, **dadurch gekennzeichnet , dass** die gesamte Zeit des Anbratens von 1 bis 2 Stunden bei einer Temperatur von 80 bis 120°C, vorzugsweise von 100 bis 110°C, beträgt.

11. Verfahren nach einem der Ansprüche 1 bis 10, **dadurch gekennzeichnet, dass** im Schritt (v) die Gesamtheit, die von dem Fleisch des Geflügels und der gegrillten mazerierten Haut gebildet wird, in einem Kessel während einer Dauer von 2 bis 5 Stunden bei einer Temperatur von 85 bis 110°C, vorzugsweise von 100 bis 110°C, gekocht bzw. gebraten wird.
